# EUROPÄISCHE PATENTANMELDUNG

(11) **EP 1 400 751 A1**
(43) Veröffentlichungstag der Anmeldung: **24.03.2004**
(21) Anmeldenummer: 02020816.1
(22) Anmeldetag: 17.09.2002
(51) Int. Cl.: F23R 3/00

(54) **Brennkammer für eine Gasturbine**

(71) Anmelder: SIEMENS AKTIENGESELLSCHAFT, 80333 München (DE)
(72) Erfinder: Tiemann, Peter, 58452 Witten (DE)

(57) **Zusammenfassung**

Die Erfindung betrifft eine Brennkammer (1) für eine Gasturbine (24) mit wenigstens einem in einer Einlassöffnung (2) der Brennkammer (1) anordbaren, geschlossen gekühlten Brennereinsatz (3) zum Zuführen und/oder Zünden eine brennbaren Gasgemisches und mit einer Auslassöffnung (4), wobei wenigstens ein mit Heißgas beaufschlagbares Bauteil, insbesondere ein Bauteil (5) einer Innenwand der Brennkamer (1), auf seiner der mit Heißgas beaufschlagbaren Seite (55) gegenüberliegenden Außenseite mit einem darüber angeordneten, flächigen Formelent (8) wenigstens einen Kanal (9) bildet, der strömungstechnisch zuführungsseitig mit einer Kühlmittelquelle und abführungsseitig mit einer Kanalanordnung des Brennereinsatzes (3) in Verbindung steht.

## Beschreibung

Die Erfindung betrifft eine Brennkammer für eine Gasturbine mit wenigstens einem in einer Einlassöffnung der Brennkammer anordbaren, geschlossen gekühlten Brennereinsatz zum Zuführen und/oder Zünden eines brennbaren Gasgemisches und mit einer Auslassöffnung. Die Erfindung betrifft ferner einen Brennereinsatz zur Anordnung an einer solchen Brennkammer sowie eine Gasturbine mit einer derartigen Brennkammer.

Neben einer Anwendung in Luftfahrzeugen zum Vortrieb finden Gasturbinen insbesondere bei der Energieerzeugung verbreitete Anwendung. Dabei wird ein zündfähiges Gasgemisch in der Brennkammer gezündet, wobei die durch die exotherme Reaktion freigesetzte Energie zu einer Expansion und/oder Druckerhöhung führt. Die so erzeugten Verbrennungsgase werden einem nachgeschalteten Strömungskanal einer Turbine zugeführt, um die Energie des Gases in eine mechanische Energie, insbesondere eine Rotationsenergie, zu überführen. Die so gewonnene mechanische Rotationsenergie kann beispielsweise zur Erzeugung von Strom oder auch zum Antrieb eines Schiffes eingesetzt werden.

Hinsichtlich der Konstruktion von Brennkammern für Gasturbinen sind grundsätzlich zwei unterschiedliche Ansätze bekannt. Einerseits wird die Brennkammer ringförmig ausgestaltet, wobei von mindestens einem, üblicherweise mehreren Brennern, gezündetes Gasgemisch in die ringförmige Brennkammer eingeleitet wird, in der es sich gleichmäßig verteilt und in einer ringförmigen Strömung in Richtung der radial um eine Rotorwelle angeordneten Leit- und Laufschaufeln des Strömungskanals der Turbine strömt. Andererseits sind Brennkammeranordnungen bekannt, die mehrere Einzelbrennkammern, so genannte Cans, aufweisen.

Um eine hohe Leistungsfähigkeit solcher Turbinen unter Berücksichtigung der extremen physikalischen Anforderungen zu erreichen, sind vielfach Brennkammern sowie auch Brennereinsätze gekühlt. Vielfach wird dazu die Kühlung aus einem bereits vorhandenen Kühlmittelreservoir entnommen, welches zugleich auch eine Komponente des verbrennenden Gasgemisches darstellt. Insbesondere wird als Kühlmittel Luft verwendet, die vor der Zuführung zur Brennkammer verdichtet worden ist. Diese Luft dient zugleich als Kühlmittel. Um den Wirkungsgrad der Gasturbine durch die Abzweigung von Kühlluft nicht signifikant zu beeinträchtigen, werden zunehmend geschlossene Kühlsysteme eingesetzt, bei denen die Luft nach Ausführen der Kühlfunktion der Brennkammer wieder zugeführt wird. So kann einerseits ein Verlust an Luft vermieden und andererseits die von der Kühlluft aufgenommene Wärmeenergie wieder in den Prozess zurückgeführt werden.

Nachteilig bei diesem Stand der Technik ist, dass derartige geschlossene Kühlsysteme konstruktiv sehr aufwändig und in der Montage kompliziert zu handzuhaben ist.

Der vorliegenden Erfindung liegt daher die Aufgabe zugrunde, eine geschlossen gekühlte Brennkammer zu schaffen, mit der eine Vereinfachung der Herstellung und Montage erreichbar ist.

Als Lösung der Aufgabe wird mit der Erfindung eine Brennkammer für eine Gasturbine mit wenigstens einem in einer Einlassöffnung der Brennkammer anordbaren, geschlossen gekühlten Brennereinsatz zum Zuführen und/oder Zünden eines brennbaren Gasgemisches und mit einer Ausslassöffnung vorgeschlagen, wobei der Brennereinsatz durch wenigstens eine im Bereich der Einlassöffnung befestigbare, flächige Basisplatte fixierbar ist, welches zugleich einen Teil einer Innenwand der Brennkammer und seine nach außen gerichtete Seite mit einem darüber angeordneten, flächigen Formelement wenigstens einen Kanal bildet, der strömungstechnisch zuführungsseitig mit einer Kühlmittelquelle und abführungsseitig mit einer Kanalanordnung des Brennereinsatzes in Verbindung steht.

Der vorliegenden Erfindung liegt die Erkenntnis zugrunde, dass durch eine Kühlung von mit Heißgas beaufschlagten Bauteilen deren Belastbarkeit erhöht und deren Alterung vermindert werden kann. Dies kann sich deutlich auf die Kosten für Wartung und Betrieb auswirken, beispielsweise indem Wartungsintervalle verlängert werden können oder ein Gesamtwirkungsgrad der Turbine erhöht werden kann. Mit der vorliegenden Erfindung wird somit erstmals ein Bauteil vorgeschlagen, welches selbst zugleich Bestandteil der Brennkammerwand ist und einen Bestandteil eines Kühlkanals bildet, wodurch eine verbesserte Kühlwirkung erreicht werden kann. Zusammen mit dem Formelement kann somit der Kühlkanal ausgebildet werden, über dessen Ausgestaltung eine weitgehend bedarfsgerechte Kühlwirkung erreicht werden kann. So kann beispielsweise die Kühlwirkung in hoch belasteten Bereichen des Bauteils aufgrund der Ausgestaltung des Kanals erhöht sein, während sie in geringer beanspruchten Bereichen erniedrigt sein kann. Darüber hinaus kann eine weitgehend gleichmäßige Beanspruchung des Bauteils erreicht werden, wodurch innere Spannungen im Bauteil reduziert werden können. Insgesamt ist somit das Bauteil höher belastbar. Die Lösung gemäß der vorliegenden Erfindung kann sowohl bei Cans als auch bei Ringbrennkammern eingesetzt werden.

Es wird ferner vorgeschlagen, dass auf der Außenseite des mit Heißgas beaufschlagbaren Bauteils ein Halteelement angeordnet ist. Vorteilhaft kann das Formelement über das Halteelement mit dem mit Heißgas beaufschlagbaren Bauteil verbunden sein. So kann das Halteelement beispielsweise das Formelement über eine kraftschlüssige Verbindung mit dem Bauteil verbinden, wobei es eine bewegliche Abstützung zur Ausbildung einer schiebenden Lagerung an den Seiten bilden kann. Vorteilhaft ist das Halteelement am Bauteil befestigt. Es kann jedoch auch an anderen Maschinenteilen befestigt sein. Das Halteelement kann durch eine Klammer ein, einen Bügel oder dergleichen gebildet sein. Es kann jedoch auch Haltearme aufweisen, die ein Festlegen des Formelements am Bauteil an mehreren unterschiedlichen Stellen ermöglicht.

Weiterhin wird vorgeschlagen, dass das Halteelement mittels wenigstens eines Befestigungselements mittig auf der Basisplatte festlegbar ist. Ein Einfluss von geometrischen Formänderungen des Bauteils aufgrund seiner Belastung auf das Halteelement sowie eine Positionsänderung relativ zum Bauteil können vermieden werden. Vorteilhaft ist dazu das Halteelement mittig zum Bauteil befestigt, so dass die relative Lage des Halteelements zum Bauteil unabhängig von dessen Belastung erhalten bleibt. Das Befestigungselement kann beispielsweise durch eine Schraube gebildet sein, die in eine entsprechende Gewindebohrung des Bauteils einführbar ist. Es können jedoch auch andere bekannte Befestigungsmittel zum Einsatz kommen wie Nieten, Klammern oder dergleichen. Ein geringer Montageaufwand kann erreicht werden. Es können jedoch auch mehrere Befestigungselemente vorgesehen sein.

Darüber hinaus wird vorgeschlagen, dass das Halteelement an seinen Endbereichen eine Auflage aufweist. Das Halteelement kann Befestigungsbereiche zur Befestigung am Bauteil sowie davon beabstandete Bereiche zur Festlegung des Formteils am Bauteil aufweisen. Das Halteelement kann dazu beispielsweise als stabförmiges Element mit einer mittigen Befestigungsmöglichkeit am Bauteil und Auflagen an den beiden Endbereichen ausgebildet sein. Die Auflagen können so ausgebildet sein, dass eine Änderung der geometrischen Erstreckung des Formelements und/oder des Bauteils nicht behindert werden. Da Halteelement kann jedoch auch eine X-förmige oder sternförmige Struktur aufweisen, wobei es über eine zentrale Öffnung für ein Befestigungselement verfügt. Die Haltearme können gleiche oder unterschiedliche Längen aufweisen. Sie können in gleichen oder unterschiedlichen Winkeln zueinander ausgerichtet sein.

In einer weiteren Ausgestaltung wird vorgeschlagen, dass das Formelement durch ein Abdeckelement abgedeckt ist. Das Formelement kann so vor Einwirkungen aus der Umgebung geschützt werden. Beispielsweise kann das Abdeckelement als Blech ausgebildet sein. Das Abdeckelement kann darüber hinaus mit dem Formelement einen weiteren Kanal bilden, der beispielsweise mit dem ersten Kanal gekoppelt ist.

Im Rahmen einer vorteilhaften Weiterbildung der vorliegenden Erfindung wird vorgeschlagen, dass das mit Heißgas beaufschlagbare Bauteil eine im Bereich der Einlassöffnung angeordnete, zugleich einen Teil der Innenwand der Brennkammer bildende, flächige Basisplatte ist, mittels der der Brennereinsatz fixierbar ist. Vorteilhaft kann erreicht werden, dass eine zur Strömungsseparation im Bereich des Brennereinsatzes wegen der geschlossenen gekühlten Ausführung benötigte weitere Wand eingespart werden kann. Herstellungsaufwand und Kosten können reduziert werden. Darüber hinaus können Montagewand sowie Wartungsaufwand reduziert werden. Die für das geschlossen gekühlte System erforderliche zweite Wand wird zugleich durch die Basisplatte in Verbindung mit dem Brennereinsatz gebildet. Die durch den Kanal strömende Kühlluft kann der Brennkammer wieder zugeführt werden, wobei die durch die Kühlluft aufgenommene Energie wieder in den Prozess zurückgeführt wird. Die Basisplatte kann beispielsweise als Gussteil ausgebildet sein. Daneben kann jedoch die Basisplatte auch aus einem anderen Werkstoff wie Keramik oder dergleichen gebildet sein. Die Basisplatte kann ein Teil der Brennkammer sein und als frei tragendes Wandelement ausgebildet sein.

Es wird weiterhin vorgeschlagen, dass das mit Heißgas beaufschlagbare Bauteil eine im Bereich der Einlassöffnung angeordnete, zugleich einen Teil der Innenwand der Brennkammer bildende, flächige Basisplatte ist, mittels der der Brennereinsatz fixierbar ist. Gerade im Bereich der Einlassöffnung kann eine erhebliche, konstruktive Vereinfachung und auch eine Erleichterung der Montage und/oder Demontage erreicht werden. Beispielsweise kann die Basisplatte eine im wesentlichen X-förmige Struktur mit jeweils einer Ausnehmung an zwei gegenüberliegenden Seiten aufweisen, um einen Brennereinsatz jeweils hälftig zu umschließen, sodass jeweils zwei benachbarte Basisplatten einen Brennereinsatz voll umfänglich umschließen. Hierdurch kann die Vielzahl an unterschiedlichen Bauelementen reduziert werden, wobei zugleich eine hohe Belastbarkeit erreicht werden kann.

Vorteilhaft wird vorgeschlagen, dass die Basisplatte zur Aufnahme des Brennereinsatzes eine seitliche Ausnehmung aufweist. Die seitliche Ausnehmung kann den Brennereinsatz aufnehmen, wodurch eine einfache Montage erreicht wird. Darüber hinaus kann eine Verbindung des Kanals zur Kanalanordnung des Brennereinsatzes hergestellt werden, indem beispielsweise die Ausnehmung mit dem Kanal verbundene Öffnungen aufweist, über die die Kühlluft dem Brennereinsatz zugeführt werden kann. Es kann eine Durchführung des Brennereinsatz vom Außenbereich der Turbine in die Brennkammer erreicht werden.

Es wird ferner vorgeschlagen, dass die Basisplatte zur Befestigung an der Einlassöffnung wenigstens einen Befestigungsflansch aufweist. Vorteilhaft kann die Basisplatte mit bekannten Befestigungsmitteln wie Schrauben, Nieten und dergleichen, an der Einlassöffnung befestigt werden. Zusammen mit einer entsprechend ausgebildeten Gegenfläche an der Einlassöffnung kann mit dem Flansch eine hochbelastbare Dichtungsfunktion erreicht werden. Bei Bedarf kann zudem auf einfache weise eine Zwischenlage vorgesehen werden, durch die eine Erhöhung der Dichtungswirkung und/oder eine Ausgleichsmöglichkeit hinsichtlich Verspannungen sowie Unebenheiten der Dichtflächen erreicht werden kann. Darüber hinaus kann durch die Ausführung als Flansch eine hohe mechanische Belastbarkeit erreicht werden.

Ferner wird vorgeschlagen, dass zwischen dem Befestigungsflansch und dem Befestigungsbereich der Einlassöffnung ein Dichtungselement anordbar ist. Vorteilhaft können Unebenheiten der zu verbindenden Oberflächen ausgeglichen werden. Darüber hinaus ermöglicht das Dichtungselement einen Ausgleich insbesondere bei Änderungen des Betriebs, wenn sich die zu verbindenden Bereiche in ihrer geometrischen Position und Erstreckung unterschiedlich verändern.

Weiterhin wird vorgeschlagen, dass das Dichtungselement ringförmig ausgebildet ist. So kann es vorteilhaft als ein einstückiges Bauteil gehandhabt werden. Montageaufwand kann reduziert werden.

In einer weiteren Ausgestaltung wird vorgeschlagen, dass die Ausnehmungen zweier benachbart angeordneter Basisplatten jeweils eine den Brennereinsatz umschließende Öffnung bilden. Vorteilhaft können Basisplatten einzeln demontiert werden, ohne dass eine Demontage des Brennereinsatzes erforderlich ist. Insbesondere kann bei Anordnung in einer Ringbrennkammer eine einfache Montage erreicht werden.

In einer weiteren erfindungsgemäßen Ausgestaltung wird vorgeschlagen, dass zwischen der Basisplatte und dem Brennereinsatz eine Verbindungshülse anordbar ist. So kann mit der Verbindungshülse vorteilhaft eine zuverlässige Dichtwirkung erreicht werden, wobei zugleich Toleranzen der abzudichtenden Oberflächen ausgeglichen werden können.

Ferner wird vorgeschlagen, dass die Verbindungshülse aus zwei sich axial erstreckenden Halbschalen gebildet ist. So kann vorteilhaft die Verbindungshülse an einem Brennereinsatz angeordnet werden, dessen ausgangsseitiges Ende den Innendurchmesser der Hülse überragt.

Darüber hinaus wird vorgeschlagen, dass die Verbindungshülse wenigstens eine radiale Bohrung aufweist, die an einem Ende mit dem Kanal verbunden ist und mit ihrem gegenüberliegenden Ende in einer am inneren Umfang der Hülse vorgesehenen Ringnut mündet. So kann vorteilhaft erreicht werden, dass das den Kanal durchströmende Kühlmittel über die Bohrung und die Ringnut wieder dem Gasgemisch zugeführt wird, um so einen Verlust zu vermeiden.

Ferner wird vorgeschlagen, dass die Verbindungshülse wenigstens eine radiale Bohrung aufweist, die an einem Ende mit einem von Formelement und Abdeckelement gebildeten Kanal verbunden ist und mit ihrem gegenüberliegenden Ende in einer am inneren Umfang der Verbindungshülse vorgesehenen Ringnut mündet. So kann vorteilhaft eine Kühlung des Brennereinsatzes über die Verbindungshülse verstärkt sein. Es besteht weiter die Möglichkeit, die Kühlwirkung für den Brennereinsatz bedarfsgerecht einzustellen. So kann eine thermische Entkopplung zwischen Brennereinsatz und Basisplatte verbessert werden.

Um das Kühlfluid nach Durchströmen der Kühlkanäle wieder dem Prozess zuführen zu können, wird vorgeschlagen, dass die Ringnut strömungstechnisch mit der Kanalanordnung des Brennereinsatzes in Verbindung steht. Die durch das Kühlfluid aufgenommene Energie kann somit vorteilhaft dem Prozess wieder zugeführt werden. Ein hoher Wirkungsgrad der Turbine kann erreicht werden. Darüber hinaus kann ein Energieeintrag an anderer unerwünschter Stelle, beispielsweise am Gehäuse der Turbine vermieden werden.

In einer weiteren Ausgestaltung wird vorgeschlagen, dass zwischen angrenzenden Seiten benachbart angeordneter Basisplatten ein Dichtelement anordbar ist, das mittels der Verbindungshülse festlegbar ist. Vorteilhaft können belastungsabhängige geometrische Änderungen der Basisplatten ausgeglichen werden, ohne dass eine Dichtheit der Anordnung wesentlich beeinflusst werden würde. Um eine Dichtungswirkung zwischen benachbarten Basisplatten einer großen Brennkammer zu verbessern, kann an den benachbart angrenzenden Stirnseiten der Basisplatten jeweils eine Nut vorgesehen sein, in der das Dichtelement anordbar ist. Gerade bei großen Brennkammern kann bei Verwendung mehrerer Basisplatten vorteilhaft eine gute Dichtwirkung erreicht werden.

Mit der Erfindung wird weiterhin ein Brennereinsatz zur Anordnung in einer Öffnung zuvor angegebenen Brennkammer mit einem mit einer Außenwand der Brennkammer in Verbindung stehenden ersten Bereich und einem mit diesem trennbar verbundenen, zur Brennkammer gerichteten zweiten Bereich vorgeschlagen, wobei der zweite Bereich über die Basisplatte mit der Einlassöffnung der Brennkammer gekoppelt ist. Vorteilhaft ist der zweite Bereich des Brennereinsatzes zum Inneren der Brennkammer hin ausbaubar, ohne dass die Brennkammer in aufwändiger Weise zerlegt werden müßte. Wartungsaufwand kann weiter reduziert werden.

Mit der Erfindung wird auch eine Gasturbine mit einer Schaufelanordnung bestehend aus einem Strömungskanal mit auf einem drehbaren Rotor angeordneten Laufschaufeln und mit drehfest angeordneten Leitschaufeln vorgeschlagen, wobei in Strömungsrichtung einer Gasströmung vor der Schaufelanordnung eine erfindungsgemäße Brennkammer, wie oben ausgeführt, angeordnet ist. Vorteilhaft können die Kosten und der Aufwand für die Wartung reduziert werden.

Es wird ferner vorgeschlagen, dass an der Brennkammer der Turbine ein zuvor beschriebener Brennereinsatz angeordnet ist. So kann vorteilhaft erreicht werden, dass die stark beanspruchten Bereiche der Brennereinsätze auf einfache Weise einer Wartung, beispielsweise durch Austausch, zugänglich sind, wenn eine Verschleissgrenze oder eine maximale Betriebsdauer erreicht ist. Ein Ersatz des vollständigen Brennereinsatzes kann vermieden werden. Ersatzteilkosten können eingespart werden.

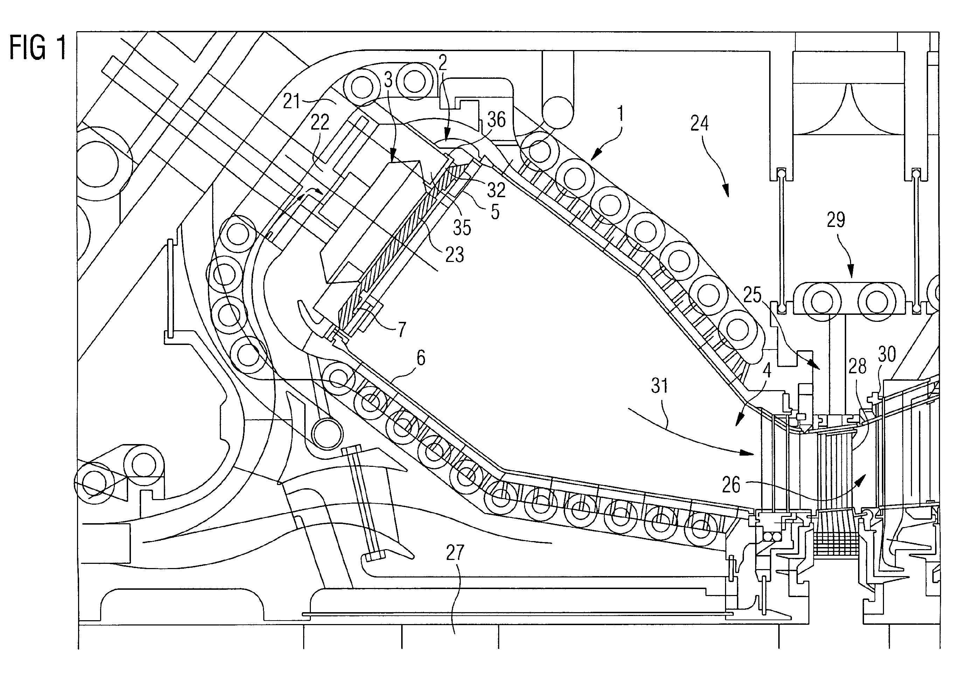

Weitere Einzelheiten, Merkmale und Vorteile der Erfindung sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktion auf die Beschreibung des Ausführungsbeispiels in Fig. 1 verwiesen.

Es zeigen:
- Fig. 1: eine Schnittansicht einer erfindungsgemäßen Brennkammer mit einem Turbinenauschnitt,
- Fig. 2: eine perspektivische, schematische Ansicht einer erfindungsgemäßen Basisplatte,
- Fig. 3: einen Schnitt durch die Basisplatte in Fig. 2 entlang einer Linie III-III,
- Fig. 4: einen Schnitt durch die Basisplatte in Fig. 2 entlang einer Linie IV-IV,
- Fig. 5: einen Schnitt durch einen Bereich der Basisplatte in Fig. 2 entlang einer Linie V-V,
- Fig. 6: eine schematische Explosionsansicht der Basisplatte in Fig. 2 mit Dichtungsmitteln und
- Fig. 7: eine Explosionsansicht der Basisplatte in Fig. 6 mit einem zusätzlichen Halteelement.

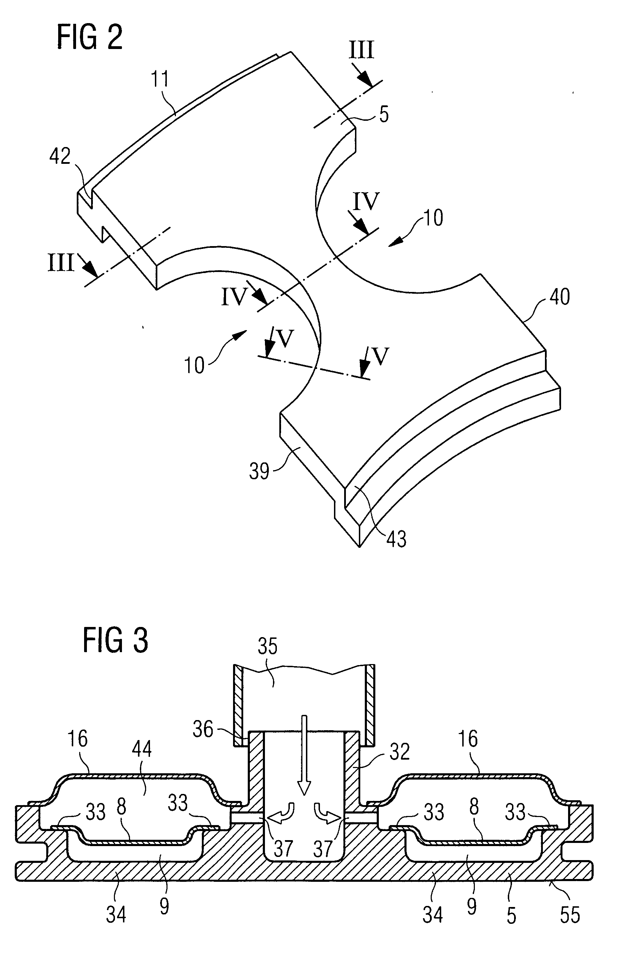

In Fig. 1 ist eine Brennkammer 1 für eine Gasturbine 24 mit einem in einer Einlassöffnung 2 der Brennkammer 1 anordbaren, geschlossen gekühlten Brennereinsatz 3 zum Zuführen und/oder Zünden eines brennbaren Gasgemisches und mit einer Auslassöffnung 4 dargestellt. Der Brennereinsatz 3 ist durch eine im Bereich der Einlassöffnung 2 befestigbare, flächige Basisplatte 5 fixierbar. Die Basisplatte 5 bildet mit ihrer Seite 55 zugleich einen Teil einer Innenwand 6 der Brennkammer 1. Die nach außen gerichtete Seite 7 der Basisplatte 5 bildet mit einem darüber angeordneten, flächigen Formelement 8 zwei Kanäle 9, die strömungstechnisch zuführungsseitig mit einer nicht näher dargestellten Kühlmittelquelle und abführungsseitig mit einer Kanalanordnung des Brennereinsatzes 3 in Verbindung stehen (Fig. 3).

Das Formelement 8, hier als Blechteil ausgeführt und auch Prallkühlblech genannt, bildet mit in der Basisplatte 5 ausgebildeten Ausnehmungen 34 geschlossene Kanäle 9. Dazu ist das Prallkühlblech 8 in den Randbereichen an der Basisplatte 5 angeschweißt. Ferner weist die Basisplatte 5 einen Stutzen 32 auf, der mit einem Rohr 35 verbindbar ist und einen Rohrfit 36 bildet. Alternativ können jedoch auch mehrere Stutzen 32 vorgesehen sein, wenn es aus konstruktiver Sicht sinnvoll ist, und sie können zur Basisplatte 5 lösbar sein.

Ferner ist über dem Prallkühlblech 8 ein Abdeckblech 16 angeordnet, welches mit dem Prallkühlblech 8 Kanäle 44 bildet. Dazu ist das Abdeckblech 16 ebenfalls an seinen Seiten mit der Basisplatte 5 verschweißt. Über Kanäle 37 ist der Innenraum des Stutzens 32 mit den Kanälen 44 verbunden, die ihrerseits mit den Kanälen 9 verbunden sind. Über Öffnungen 38 sind die Kanäle 9 mit einem nicht näher dargestellten Kanalsystem des Brennereinsatzes 3 verbunden.

Fig. 2 zeigt schematisch eine perspektivische Ansicht der erfindungsgemäßen Basisplatte 5, welches in dieser Ausgestaltung für eine Ringbrennkammer vorgesehen ist. Die Basisplatte 5 weist zwei parallele Längsseiten 39, 40 auf, an denen jeweils mittig eine Ausnehmung 10 vorgesehen ist, so dass eine im wesentlichen X-förmige Struktur gebildet ist. In Längsrichtung sind an Querseiten 42, 43 Flansche 11, 41 vorgesehen, über die die Basisplatte 5 mit der Einlassöffnung 2 der Brennkammer 1 verbindbar ist. Die Querseiten 42, 43 sowie auch die Flansche 11, 41 weisen eine Krümmung auf, sodass mehrere Basisplatten 5 an der Ringbrennkammer 1 nebeneinander benachbart zueinander angeordnet werden können. So bilden die Ausnehmungen 10 zweier benachbarter Basisplatten 5 jeweils eine Öffnung zur Aufnahme eines Brennereinsatzes 3.

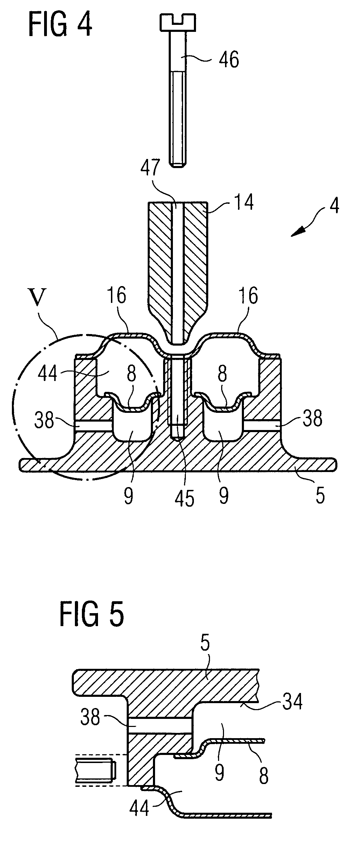

Fig. 4 zeigt einen Schnitt durch die Basisplatte 5 auf Höhe der beiden Ausnehmungen 10. Zur Erhaltung des zur Verfügung stehenden Querschnitts sind die Wände der Kanäle 9, 44 entsprechend in der Höhe größer ausgebildet. Wie auch aus dieser Figur ersichtlich, sind die Kanäle 9 über Öffnungen 38 nach außen verbunden. Über dem Formelement 8 ist der weitere Kanal 44 gebildet, in dem oberhalb des Prallkühlblechs 8 das Abdeckblech 16 vorgesehen ist.

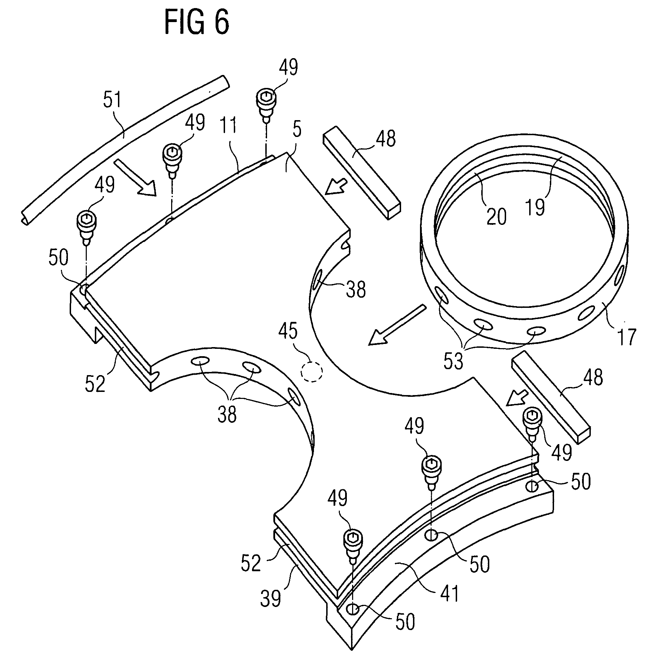

Zentrisch ist an der Basisplatte 5 eine Gewindebohrung 45 vorgesehen. Mittels einer Schraube 46 wird ein stegförmiges Halteelement 14, welches eine Bohrung 47 aufweist, an der Gewindebohrung 45 festgeschraubt. In Fig. 5 ist der Austrittsbereich des Kühlmittels aus der Basisplatte 5 in Richtung Brennereinsatz 3 vergrößert dargestellt. Die Basisplatte 5 ist in dieser Ausgestaltung als Gussteil ausgebildet.

Fig. 6 zeigt eine Explosionansicht, in der schematisch eine Montagemöglichkeit der Basisplatte 5 dargestellt ist. Die Flansche 11 und 41 sind mit Bohrungen 50 versehen, in die Schrauben 49 einsetzbar sind. Mittels der Schrauben 49 ist die Basisplatte 5 an der Einlassöffnung 2 befestigbar. Zwischen den Flanschen 11, 41 und den Gegenflächen der Eingangsöffnung 2 ist jeweils ein Dichtungselement 51 vorgesehen. In den Längsseiten 39, 40 sind jeweils sich von den Ausnehmungen 10 bis zu den Querseiten 42, 43 erstreckend Nuten 52 vorgesehen, in die Dichtungselemente 48 einsetzbar sind.

In die durch die Ausnehmungen 10 benachbarter Basisplatten 5 gebildeten ringförmigen Öffnungen ist jeweils eine aus zwei Halbschalen gebildete Verbindungshülse 17 einsetzbar. Die Verbindungshülse 17 weist Bohrungen 53 auf, die mit einer Ringnut 20 am inneren Umfang 19 der Hülse 17 verbunden sind. Die Bohrungen 53 sind derart über den Umfang der Hülse 17 verteilt, dass sie mit korrespondierenden Öffnungen 38 der Basisplatte 5 im eingebauten Zustand fluchten. In die Hülse 17 ist der Brennereinsatz 3 einsetzbar, wobei die Ringnut 20 mit einem nicht näher dargestellten Kanalsystem zur geschlossenen Kühlung des Brennereinsatzes 3 verbindbar ist. So kann Kühlluft, die das aus Kanälen 9, 44 gebildete Kanalsystem der Basisplatte 5 durchströmt hat, der Brennkammer 1 zugeführt werden. Über die Verbindungshülse 17 sind die Dichtungselemente 48 festlegbar.

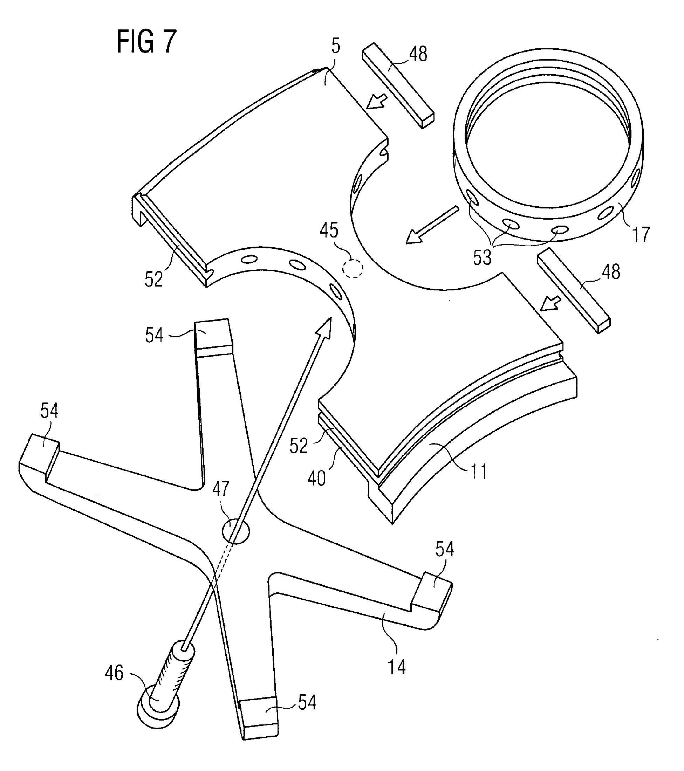

Fig. 7 zeigt eine schematische Explosionsansicht zur Anordnung eines alternativen, X-förmigen Halteelements 14, welches eine zentrische Bohrung 47 aufweist, über die es mittels einer Schraube 46 an der Gewindebohrung 45 der Basisplatte 5 befestigbar ist. Das Halteelement 14 weist an seinen Enden Auflagebereiche 54 auf, die auf der nach außen gerichteten Oberfläche der Basisplatte 5 indessen Eckbereichen aufliegen. So können Durchbiegungen der Basisplatte 5 aufgrund thermischer Einwirkungen durch das Halteelement 14 reduziert werden. Dabei erweist es sich als vorteilhaft, dass das Halteelement 14 nur an einer Stelle mit der Basisplatte 5 verbunden ist und durch die kleinen Auflageflächen von diesem weitgehend thermisch entkoppelt ist. Bei Veränderung der geometrischen Abmessungen aufgrund thermischer Einwirkungen können so die Auflagebereiche 54 über die entsprechenden Oberflächenbereiche gleiten, sodass entsprechende Druckund/oder Spannungen vermieden werden. Die Position des Halteelements 14 relativ zur Basisplatte 5 ist weitgehend unabhängig von der Belastung der Basisplatte 5.

Aus Fig. 1 ist ersichtlich, dass der Brennereinsatz 3 zweiteilig ausgeführt ist. Dieser weist einen ersten Bereich 22 auf, der mit einer Brennkammeraußenwand 21 verbunden ist. Der erste Bereich 22 des Brennereinsatzes 3 ist mit einem zweiten Bereich 23 trennbar verbunden, welcher über die Basisplatte 5 mit der Einlassöffnung 2 der Brennkammer 3 gekoppelt ist. Vorteilhaft kann durch Entfernen der Hülse 17 der Bereich 23 des Brennereinsatzes 3 in Richtung Brennkammer entnommen werden. Zum Austausch des thermisch hoch beanspruchten Bereichs 23 des Brennereinsatzes 3 ist somit nicht mehr die vollständige Demontage des Brennereinsatzes 3 erforderlich, sondern es können die hoch beanspruchten Teile auf einfache Weise durch die Brennkammer 1 ausgetauscht werden.

Über den Brennereinsatz 3 wird im Betrieb ein brennbares Gasgemisch in die Brennkammer 1 eingeführt und gezündet. Die so erzeugten Verbrennungsgase strömen in Richtung 31 in die Schaufelanordnung 25 der Gasturbine 24. Diese besteht aus einem Strömungskanal 26 mit auf einem drehbaren Rotor 27 angeordneten Laufschaufeln 28 und mit drehfest angeordneten Leitschaufeln 30. Die in den Verbrennungsgasen gespeicherte Energie wird in diesem Abschnitt unter anderem in Rotationsenergie umgewandelt.

Der Gegenstand der vorliegenden Erfindung ermöglicht ferner eine einfache Demontage von Basisplatten 5, indem zunächst Schrauben 49 und anschließend nicht näher dargestellte Verschraubungen der Verbindungshülse 17 mit der Basisplatte 5 gelöst werden. Danach erfolgt eine Demontage der Dichtung 48. Nun kann die Basisplatte 5 komplett mit ihrem gesamten Anbau entnommen werden. Eine Montage erfolgt in umgekehrter Reihenfolge.

Die in den Figuren dargestellten Ausführungsbeispiele dienen lediglich der Erläuterung der Erfindung und sind für diese nicht beschränkend. So können insbesondere die Basisplatte, das Halteelement sowie auch die Befestigung und so weiter variieren.

### Bezugszeichenliste

- 1: Brennkammer
- 2: Einlassöffnung
- 3: Brennereinsatz
- 4: Auslassöffnung
- 5: Basisplatte
- 6: Innenwand
- 7: Seite
- 8: Formelement
- 9: Kanal
- 10: Ausnehmung
- 11: Flansch
- 12: Öffnung
- 13: Außenseite
- 14: Halteelement
- 15: Befestigungsschraube
- 16: Abdeckelement
- 17: Hülse
- 18: Bohrungen
- 19: Umfang
- 20: Ringnut
- 21: Außenwand
- 22: erster Bereich
- 23: zweiter Bereich
- 24: Gasturbine
- 25: Schaufelanordnung
- 26: Strömungskanal
- 27: Rotor
- 28: Laufschaufeln
- 29: Gehäuse
- 30: Leitschaufeln
- 31: Strömungsrichtung
- 32: Stutzen
- 33: Schweißstelle
- 34: Ausnehmung
- 35: Rohr
- 36: Rohrfit
- 37: Kanal
- 38: Öffnungen
- 49: Längsseite
- 40: Längsseite
- 41: Flansch
- 42: Querseite
- 43: Querseite
- 44: Kanal
- 45: Bohrung
- 46: Schraube
- 47: Bohrung
- 48: Dichtungselement
- 49: Schraube
- 50: Bohrung
- 51: Dichtungselement
- 52: Nut
- 53: Bohrung
- 54: Auflagebereich
- 55: Brennkammerseite

## Patentansprüche

1. Brennkammer (1) für eine Gasturbine (24) mit wenigstens einem in einer Einlassöffnung (2) der Brennkammer (1) anordbaren, geschlossen gekühlten Brennereinsatz (3) zum Zuführen und/oder Zünden eines brennbaren Gasgemisches und mit einer Auslassöffnung (4), wobei wenigstens ein mit Heißgas beaufschlagbares Bauteil, insbesondere ein Bauteil (5) einer Innenwand der Brennkammer (1), auf seiner der mit Heißgas beaufschlagbaren Seite (55) gegenüberliegenden Außenseite mit einem darüber angeordneten, flächigen Formelement (8) wenigstens einen Kanal (9) bildet, der strömungstechnisch zuführungsseitig mit einer Kühlmittelquelle und abführungsseitig mit einer Kanalanordnung des Brennereinsatzes (3) in Verbindung steht.

2. Brennkammer nach Anspruch 1, **dadurch gekennzeichnet, dass** auf der Außenseite des mit Heißgas beaufschlagbaren Bauteils (5) ein Halteelement (14) angeordnet ist.

3. Brennkammer nach Anspruch 2, **dadurch gekennzeichnet, dass** das Halteelement (14) mittels wenigstens eines Befestigungselements (15) mittig auf der Basisplatte (5) festlegbar ist.

4. Brennkammer nach Anspruch 2 oder 3, **dadurch gekennzeichnet, dass** das Halteelement (14) an seinen Endbereichen eine Auflage (54) aufweist.

5. Brennkammer nach einem der Ansprüche 1 bis 4, **dadurch gekennzeichnet, dass** das Formelement (8) durch wenigstens ein Abdeckelement (16) abgedeckt ist.

6. Brennkammer nach einem der Ansprüche 1 bis 5, **dadurch gekennzeichnet, dass** das mit Heißgas beaufschlagbare Bauteil (5) eine im Bereich der Einlassöffnung (2) angeordnete, zugleich einen Teil der Innenwand der Brennkammer (1) bildende, flächige Basisplatte (5) ist, mittels der der Brennereinsatz (3) fixierbar ist.

7. Brennkammer nach Anspruch 6, **dadurch gekennzeichnet, dass** die Basisplatte (5) zur Aufnahme des Brennereinsatzes (3) eine seitliche Ausnehmung (10) aufweist.

8. Brennkammer nach Anspruch 6 oder 7, **dadurch gekennzeichnet, dass** die Basisplatte (5) zur Befestigung an der Einlassöffnung (2) wenigstens einen Befestigungsflansch (11, 41) aufweist.

9. Brennkammer nach Anspruch 8, **dadurch gekennzeichnet, dass** zwischen dem Befestigungsflansch (11, 41) und dem Befestigungsbereich der Einlassöffnung (2) ein Dichtungselement (51) anordbar ist.

10. Brennkammer nach Anspruch 9, **dadurch gekennzeichnet, dass** das Dichtungselement (51) ringförmig ausgebildet ist.

11. Brennkammer nach einem der Ansprüche 7 bis 10, **dadurch gekennzeichnet, dass** die Ausnehmungen (10) zweier benachbart angeordneter Basisplatten (5) jeweils eine den Brennereinsatz (3) umschließende Öffnung (12) bilden.

12. Brennkammer nach einem der Ansprüche 6 bis 11, **dadurch gekennzeichnet, dass** zwischen der Basisplatte (5) und dem Brennereinsatz (3) eine Verbindungshülse (17) anordbar ist.

13. Brennkammer nach Anspruch 12, **dadurch gekennzeichnet, dass** die Verbindungshülse (17) aus zwei sich axial erstreckenden Halbschalen gebildet ist.

14. Brennkammer nach Anspruch 12 oder 13, **dadurch gekennzeichnet, dass** die Verbindungshülse (17) wenigstens eine radiale Bohrung (18) aufweist, die an einem Ende mit dem Kanal (9) verbunden ist und mit ihrem gegenüberliegenden Ende in einer am inneren Umfang (19) der Verbindungshülse (17) vorgesehenen Ringnut (20) mündet.

15. Brennkammer nach einem der Ansprüche 12 bis 14, **dadurch gekennzeichnet, dass** die Verbindungshülse (17) wenigstens eine radiale Bohrung (18) aufweist, die an einem Ende mit dem Kanal (44) verbunden ist und mit ihrem gegenüberliegenden Ende in einer am inneren Umfang (19) der Verbindungshülse (17) vorgesehenen Ringnut (20) mündet.

16. Brennkammer nach Anspruch 14 oder 15, **dadurch gekennzeichnet, dass** die Ringnut (20) strömungstechnisch mit der Kanalanordnung des Brennereinsatzes (3) in Verbindung steht.

17. Brennkammer nach einem der Ansprüche 12 bis 16, **dadurch gekennzeichnet, dass** zwischen angrenzenden Seiten zweier benachbart angeordneter Basisplatten (5) ein Dichtelement (48) anordbar ist, das mittels der Verbindungshülse (17) festlegbar ist.

18. Brennereinsatz (3) zur Anordnung in einer Einlassöffnung (2) einer Brennkammer (1) nach einem der vorhergehenden Ansprüche mit einem mit einer Außenwand (21) der Brennkammer (1) in Verbindung stehenden ersten Bereich (22) und einem mit diesem trennbar verbundenen, zur Brennkammer (1) gerichteten zweiten Bereich (23), wobei der zweite Bereich (23) über die Basisplatte (5) mit der Einlassöffnung (2) der Brennkammer (3) gekoppelt ist.

19. Gasturbine (24) mit einer Schaufelanordnung (25) bestehend aus einem Strömungskanal (26) mit auf einem drehbaren Rotor (27) angeordneten Laufschaufeln (28) und mit drehfest angeordneten Leitschaufeln (30), wobei in Strömungsrichtung (31) einer Gasströmung vor der Schaufelanordnung (25) eine Brennkammer (1) nach einem der Ansprüche 1 bis 17 angeordnet ist.

20. Gasturbine (24) nach Anspruch 19, **dadurch gekennzeichnet, dass** an der Brennkammer (1) ein Brennereinsatz (3) nach Anspruch 18 angeordnet ist.
